# DEMANDE DE BREVET EUROPEEN

(11) **EP 0 924 883 A1**
(43) Date de publication de la demande: **23.06.1999**
(21) Numéro de dépôt: 98402950.4
(22) Date de dépôt: 26.11.1998
(51) Int. Cl.: H04B 10/18

(54) **Reduction de la gigue de collission par echange de longueurs d'onde dans un système de transmission à fibre optique à signaux solitons et à multiplexage de longueurs d'onde**

(30) Priorité: 27.11.1997 FR 9714907
(71) Demandeur: ALCATEL, 75008 Paris (FR)
(72) Inventeur: Leclerc, Olivier, 91240 Saint Michel sur Orge (FR); Bigo, Sébastien, 91120 Palaiseau (FR)
(74) Mandataire: Smith, Bradford Lee

(57) **Abrégé**

L'invention concerne un système de transmission à fibre optique à signaux solitons et à multiplexage de longueur d'onde; pour réduire les effets de la gigue de collision sur les canaux solitons, elle propose d'échanger au moins une fois les longueurs d'onde des canaux du multiplex, de telle sorte à inverser le signe de la variation de fréquence résiduelle induite par les collisions asymétriques sur les signaux des canaux.

L'invention s'applique notamment aux systèmes de transmission mettant en oeuvre un schéma d'allocation des fréquences assurant à intervalles réguliers une synchronicité des temps bit des différents canaux.

## Description

La présente invention a pour objet un système de transmission à fibre optique à signaux solitons et à multiplexage de longueur d'onde, ainsi qu'un procédé de transmission dans un tel système, qui permettent de réduire les effets de la gigue de collision. Elle concerne encore un dispositif et un procédé d'échange de longueurs d'onde dans un système de transmission à fibre optique à signaux solitons et à multiplexage de longueurs d'onde.

La transmission d'impulsions solitons ou solitons dans la partie d'une fibre optique à dispersion anormale est un phénomène connu. Les solitons sont des signaux impulsionnels de forme sech². Avec cette forme d'impulsion, la non-linéarité dans la partie correspondante de la fibre compense la dispersion du signal optique. La transmission des solitons est modélisée de façon connue par l'équation de Schrödinger non-linéaire.

Divers effets limitent la transmission de telles impulsions, comme la gigue induite par l'interaction des solitons avec le bruit présent dans le système de transmission, décrite par exemple dans l'article de J. P. Gordon et H. A. Haus, Optical Letters, vol. 11 n° 10 pages 665-667. Cet effet, appelé effet Gordon-Haus ou gigue Gordon-Haus, impose une limite théorique à la qualité ou au débit des transmissions par solitons.

Pour arriver à dépasser ces limite, il est possible d'utiliser une modulation synchrone des signaux solitons, à l'aide de modulateurs semi-conducteurs. Il a aussi été proposé des systèmes de filtres guidants glissants, permettant de contrôler la gigue des solitons transmis, voir par exemple EP-A-0 576 208. Il a aussi été proposé, pour assurer la régénération du signal sur la ligne, d'utiliser l'effet Kerr dans des modulateurs synchrones d'amplitude ou de phase, ou encore d'utiliser des absorbants saturables.

Par ailleurs, pour augmenter le débit des systèmes de transmission à libre optique à signaux solitons, il a aussi été proposé d'utiliser un multiplexage de longueur d'onde (en anglais "wavelength division multiplexing ou WDM). Dans ce cas, il est considéré comme avantageux d'utiliser des filtres guidants glissants du type Fabry Perot, qui sont entièrement compatibles avec des signaux mutliplexés en longueur d'onde. En revanche. l'utilisation de modulateurs synchrones ou d'absorbants saturables pour la régénération de signaux solitons multiplexés en longueur d'onde est problématique, du fait de la différence de vitesse de groupe entre les signaux des différents canaux.

Un article de E. Desurvire, O. Leclerc et O. Audouin, Optics Letters, vol. 21, n° 14, pages 1026-1028 décrit un schéma d'allocation des longueurs d'ondes, qui soit compatible avec l'utilisation de modulateurs synchrones. Cet article propose d'allouer des longueurs d'ondes aux différents canaux du multiplex de telle sorte que, pour des intervalles Z_{R} donnés entre les répéteurs, les signaux des différents canaux, ou plus exactement les temps bits des différents canaux du multiplex soient sensiblement synchronisés en arrivant aux répéteurs. On permet ainsi une modulation synchrone en ligne de tous les canaux, à des intervalles donnés, à l'aide de modulateurs synchrones discrets. Cette technique d'allocation des longueurs d'ondes du multiplex est aussi décrite dans la demande de brevet français 9600732 du 23 janvier 1996 au nom de Alcatel Submarine Networks. Dans cet article, il est proposé de choisir un sous groupe de canaux, synchrones non seulement à des intervalles Z_{R}, mais aussi à des intervalles sous multiples de Z_{R}. D'autres aspects de cette technique d'allocation de longueur d'ondes sont décrits dans les articles de O. Leclerc, E. Desurvire et O. Audouin, Synchronous WDM Soliton Regeneration : Toward 80-160 Gbit/s Transoceanic Systems, Optical Fiber Technology, 3 pages 97-116 (1997) et de E. Desurvire et al., Transoceanic Regenerated Soliton Systems: Designs for over 100 Gbit/s Capacities, Suboptic '97, pages 438-447.

Un article de L. F. Mollenauer, S. G. Evangelides, et P. J. Gordon, Wavelength Division Multiplexing with Solitons in Ultra long Distance Transmissions using Lumped Amplifiers, Journal of Lightwave Technology, vol. 9 no 3, pages 362-367 (1991) décrit le problème des collisions entre solitons dans les systèmes de transmission à mutiplexage de longueur d'onde, et insiste notamment sur les variations de vitesse de propagation induites par les collisions; de telles variations peuvent induire, en sortie du système de transmission, une gigue inacceptable sur les solitons; cet article explique que des variations de la dispersion chromatique de la fibre le long du chemin de transmission peuvent compenser les effets des collisions; il est en conséquence proposé d'utiliser des segments de dispersion différente, pour compenser les effets des collisions sur la vitesse de propagation des solitons; dans un système de transmission où la distance entre amplificateurs est faible devant la longueur des collisions.

Cette solution est difficilement applicable à l'échelle industrielle, du fait des contraintes dans la gestion des fibres, et du faible espacement entre les amplificateurs. En outre, elle ne s'applique pas à des systèmes de transmission à multiplexage de longueur d'onde utilisant des schémas d'allocation de longueur d'onde du type de ceux évoqués plus haut. dans la mesure où des variations de la dispersion de la fibre perturberaient la synchronicité des temps bit aux régénérateurs synchrones.

Un article de A. Hasegawa, S. Kumar et Y. Kodoma, Reduction of Collision-induced time-jitter in Dispersion-managed Solitons Transmission Systems, Optics Letters, vol. 21 no 1, Janvier 1996, pages 39-41 propose un schéma de gestion des dispersion dans la fibre, permettant d'augmenter la distance entre les amplificateurs. Cette solution repose sur un profil de dispersion par paliers dans la fibre approchant autant que possible un profil idéal exponentiel. Cette solution n'est pas susceptible d'être mise en oeuvre industriellement, et pose problème avec le schéma d'allocation des fréquence mentionné plus haut.

L'invention a pour objet une solution au problème de la gestion des collisions entre solitons dans un système de transmission à multiplexage de longueurs d'onde; elle évite de devoir faire varier le profil de dispersion de la fibre de transmission le long du système de transmission. L'invention s'applique particulièrement avantageusement aux système de transmission à multiplexage de longueurs d'onde dans lesquels les longueurs d'onde sont choisies de sorte à assurer une synchronicité des temps bit des différents canaux à des intervalles donnés. L'invention propose une solution simple, qui limite la gigue temporelle due aux collisions entre solitons.

Plus précisément, l'invention propose un système de transmission à fibre optique à multiplexage de longueurs d'onde et à signaux solitons, comprenant au moins une fois des moyens d'échange des longueurs d'ondes d'au moins deux canaux, de sorte à changer le signe de la variation de fréquence résiduelle induite par les collisions asymétriques sur les signaux des dits canaux.

Dans un mode de réalisation, les longueurs d'onde (λ₁ à λₙ) des différents canaux du multiplex constituent un ensemble comprenant une moitié inférieure et une moitié supérieure, et les moyens d'échange échangent les longueurs d'ondes d'au moins deux canaux, de sorte que les signaux transmis sur une longueur d'onde d'une des dites moitiés soient transmis sur une longueur d'onde de l'autre des dites moitiés.

Dans ce cas, il est possible que les moyens d'échange effectuent l'échange des longueurs d'onde de telle sorte que les signaux transmis sur une longueur d'onde λᵢ d'une des dites moitiés soient transmis sur une longueur d'onde λₙ₋ᵢ₊₁ de l'autre des dites moitiés, i étant un entier prenant au moins une valeur entre 1 et n.

Avantageusement, les moyens d'échange effectuent en outre l'échange des longueurs d'onde de telle sorte que les signaux transmis sur une longueurs d'onde λₙ₋ᵢ₊₁ d'une des dites moitiés soient transmis sur une longueur d'onde λᵢ de l'autre des dites moitiés.

L'entier i peut prendre de préférence toutes les valeurs possibles entre 1 et n.

Dans un mode de réalisation, le système de transmission comprend des moyens d'échange uniques disposés sensiblement au milieu du système de transmission.

Dans un autre mode de réalisation, le système comprend une pluralité de moyens d'échange espacés le long du système de transmission.

L'invention concerne aussi un procédé de transmission de signaux solitons en multiplexage de longueurs d'onde, comprenant au moins une étape d'échange des longueurs d'ondes d'au moins deux canaux, de sorte à changer le signe de la variation de fréquence résiduelle induite par les collisions asymétriques sur les signaux des dits canaux.

De préférence, les longueurs d'onde (λ₁ à λₙ) des différents canaux du multiplex constituent un ensemble comprenant une moitié inférieure et une moitié supérieure, et en ce que l'étape d'échange des canaux s'effectue de sorte que les signaux transmis sur une longueur d'onde d'une des dites moitiés soient transmis sur une longueur d'onde de l'autre des dites moitiés.

L'échange des longueurs d'onde s'effectue avantageusement de telle sorte que les signaux transmis sur une longueur d'onde λᵢ d'une des dites moitiés soient transmis sur une longueur d'onde λₙ₋₁₊₁ de l'autre des dites moitiés, i étant un entier prenant au moins une valeur entre 1 et n.

L'étape d'échange peut comprendre en outre l'échange des longueurs d'onde de telle sorte que les signaux transmis sur une longueurs d'onde λₙ₋ᵢ₊₁ d'une des dites moitiés soient transmis sur une longueur d'onde λᵢ de l'autre des dites moitiés.

Avantageusement, l'entier i prend toutes les valeurs possibles entre 1 et n.

Le procédé peut comprendre une seule étape d'échange, s'effectuant sensiblement après la moitié du temps de propagation.

Le procédé peut aussi comprendre une pluralité d'étapes d'échange.

L'invention concerne encore l'application d'un tel procédé à la réduction de la gigue de collision.

L'invention concerne aussi un dispositif d'échange de longueurs d'ondes, comprenant
- des moyens de démultiplexage d'un multiplex en longueurs d'onde de signaux solitons, fournissant en sortie une pluralité de canaux à des longueurs d'onde (λ₁ à λₙ), les dites longueurs d'onde constituant un ensemble formé d'une moitié inférieure et d'une moitié supérieure;
- au moins deux convertisseurs de longueur d'onde, pour échanger les longueurs d'onde d'un canal choisi dans l'une des dites moitiés et d'un canal choisi dans l'autre des dites moitiés;
- des moyens de remultiplexage des canaux.

Dans un mode de réalisation, les convertisseurs effectuent l'échange des longueurs d'onde de telle sorte que les signaux reçus sur une longueur d'onde λᵢ d'une des dites moitiés soient transmis sur une longueur d'onde λₙ₋ᵢ₊₁ de l'autre des dites moitiés, et vice-versa, i étant un entier prenant au moins une valeur entre 1 et n.

De préférence, le dispositif comprend 2E(n/2) convertisseurs, n étant le nombre de canaux.

L'invention concerne enfin un procédé d'échange de longueurs d'ondes dans un multiplex en longueurs d'onde de signaux solitons, les longueurs d'onde (λ₁ à λₙ) constituant un ensemble formé d'une moitié inférieure et d'une moitié supérieure, le procédé comprenant
- une étape de démultiplexage des canaux du multiplex;
- une étape d'échange des longueurs d'onde d'au moins un canal choisi dans l'une des dites moitiés et d'au moins un canal choisi dans l'autre des dites moitiés;
- une étape de remultiplexage des canaux.

L'étape d'échange comprend avantageusement l'échange d'une longueur d'onde λᵢ d'une des dites moitiés et d'une longueur d'onde λₙ₋ᵢ₊₁ de l'autre des dites moitiés, i étant un entier prenant au moins une valeur entre 1 et n.

De préférence, l'entier i prend toutes les valeurs entre 1 et E(n/2), n étant le nombre de canaux.

L'invention concerne encore un dispositif d'échange de longueurs d'onde, à l'intérieur d'un multiplex en longueurs d'onde de signaux solitons, les longueurs d'onde (λ₁ à λₙ) du multiplex constituant un ensemble formé d'une moitié inférieure et d'une moitié supérieure, le dispositif comprenant:
- des moyens de séparation du multiplex en des premier et seconds signaux, le premier signal comprenant les canaux dont la longueur d'onde appartient à une moitié, et le second signal comprenant les canaux dont la longueur d'onde appartient à l'autre moitié;
- des premiers moyens de conversion pour convertir les longueurs d'ondes des canaux du premier signal en des longueurs d'onde de la dite autre moitié;
- des seconds moyens de conversion pour convertir les longueurs d'ondes des canaux du second signal en des longueurs d'onde de la dite moitié;
- des moyens de combinaison des signaux fournis par les dits premiers et seconds moyens de conversion.

Avantageusement, les dits premiers et seconds moyens de conversion comprennent des mélangeurs quatre ondes pour conjuguer les signaux par rapport à une fréquence (λ₁ + λₙ)/2 médiane des fréquences extrêmes du multiplex.

Dans ce cas, les dits premiers moyens de conversion, ou respectivement les seconds moyens de conversion, comprennent en outre de préférence des filtres pour filtrer les longueurs d'ondes autres que celles de la dite autre moitié, ou respectivement autres que celles de la dite moitié.

Enfin, l'invention concerne un procédé d'échange de longueurs d'onde, à l'intérieur d'un multiplex en longueurs d'onde de signaux solitons, les longueurs d'onde (λ₁ à λₙ) du multiplex constituant un ensemble formé d'une moitié inférieure et d'une moitié supérieure, le procédé comprenant:
- une étape de séparation du multiplex en des premier et seconds signaux, le premier signal comprenant les canaux dont la longueur d'onde appartient à une moitié, et le second signal comprenant les canaux dont la longueur d'onde appartient à l'autre moitié;
- une étape de conversion des longueurs d'ondes des canaux du premier signal en des longueurs d'onde de la dite autre moitié;
- une étape de conversion des longueurs d'ondes des canaux du second signal en des longueurs d'onde de la dite moitié;
- une étape de combinaison des premier et second signaux convertis.

De préférence, l'étape de conversion comprend une conversion par mélange quatre ondes pour conjuguer les signaux par rapport à une fréquence (λ₁ + λₙ)/2 médiane des fréquences extrêmes du multiplex.

Dans ce cas, l'étape de conversion comprend avantageusement une étape de filtrage après l'étape de mélange quatre ondes.

D'autres caractéristiques et avantages de l'invention apparaîtront à la lecture de la description qui suit de modes de réalisation de l'invention, donnée à titre d'exemple et en référence aux dessins annexés qui montrent:
- figure 1, une représentation schématique d'un système de transmission selon un premier mode de réalisation de l'invention;
- figure 2, l'allure de la gigue de collision At entre deux répéteurs, sur un intervalle Z_{R} du système de transmission;
- figure 3, un système de transmission selon l'invention;
- figure 4, un dispositif d'échange de longueurs d'onde selon l'invention;
- figure 5, un autre exemple de dispositif d'échange de longueurs d'onde selon l'invention.

L'invention s'applique à un système de transmission à fibre optique à signaux solitons et à multiplexage de longueur d'onde. Elle est décrite dans la suite en référence à un système dans lequel les différentes longueurs d'onde du multiplex sont choisies de sorte à assurer, sur un intervalle donné, un glissement relatif entre les différents canaux sensiblement égal à un multiple du temps bit. Toutefois, elle n'est pas limitée à un système de transmission mettant en oeuvre un tel schéma d'allocation des fréquences, et s'applique plus généralement à tout système de transmission à signaux solitons à multiplexage de longueurs d'onde.

Dans l'exemple proposé, on peut utiliser les solutions d'allocation de longueurs d'onde décrits dans les articles de E. Desurvire et O. Leclerc mentionnés plus haut. Ces articles sont incorporés par référence à la présente description, en ce qui concerne les schémas d'allocation de longueur d'ondes. Un tel schéma d'allocation de longueurs d'ondes assure, à intervalles réguliers Z_{R} le long de la fibre, un glissement relatif entre les différents canaux sensiblement égal à un multiple du temps bit.

Le problème dans un système de transmission à multiplexage de longueurs d'onde, et en particulier dans un système avec un tel schéma d'allocation des longueurs d'ondes, est que les collisions entre les signaux solitons dans les amplificateurs ou plus généralement dans tout dispositif asymétrique du système, induisent une variation de la fréquence des solitons; cette variation se traduit par une gigue temporelle à l'arrivée; le signe de la variation de fréquence dépend de la position spectrale relative des signaux solitons subissant la collision; à titre d'exemple, si on considère deux trains de solitons à des longueurs d'onde λ₁ et λ₂, avec λ₁ < λ₂, la collision entre les signaux solitons du train à λ₁, plus rapide, et les signaux du train à λ₂ provoque une augmentation de la longueur d'onde du train de solitons à λ₂, d'une quantité Δλ, et une diminution de la longueur d'onde du train à λ₁, de la même quantité.

La variation de longueur d'onde Δλ provoquée par une collision est donnée par exemple dans la référence WDM with solitons in ultra-long distance transmission using lumped amplifiers, par Mollenauer et autres, Journ. of Light. Tech. vol. 9 n°3, Mars 91; elle dépend de la dissymétrie de la collision, i. e. de la position de l'amplificateur par rapport à celle-ci.

L'invention repose sur le fait que cette variation de longueur d'onde accélère les solitons les plus rapides. i. e. ceux dont la longueur d'onde est la plus faible, et ralentit les solitons les plus lents, i. e. ceux dont la longueur d'onde est la plus élevée. Elle propose, pour compenser les effets des collisions, d'échanger au moins une fois les longueurs d'onde des canaux du multiplex, de sorte à changer le signe de la variation de fréquence résiduelle induite par les collisions asymétriques sur un canal.

Le résultat de l'échange de longueur d'onde - le changement de signe de la variation résiduelle de fréquence - est directement et aisément vérifiable par l'application simple de la formule donnée plus haut.

L'invention propose divers modes de réalisation de cet échange; en particulier, on peut procéder à cet échange pour tous les canaux, ou seulement pour certains d'entre eux, comme décrit dans la suite.

L'effet de l'échange des canaux est une diminution - en moyenne - de la variation de fréquence résiduelle en fin de liaison, qui est la somme des variations subies sur toute la liaison. Ceci provoque une diminution en moyenne de la gigue de collision; la diminution exacte de la gigue dépend bien entendu des données présentes sur la liaison, et plus précisément de la présence d'impulsions solitons - des "1" - sur les canaux en collision.

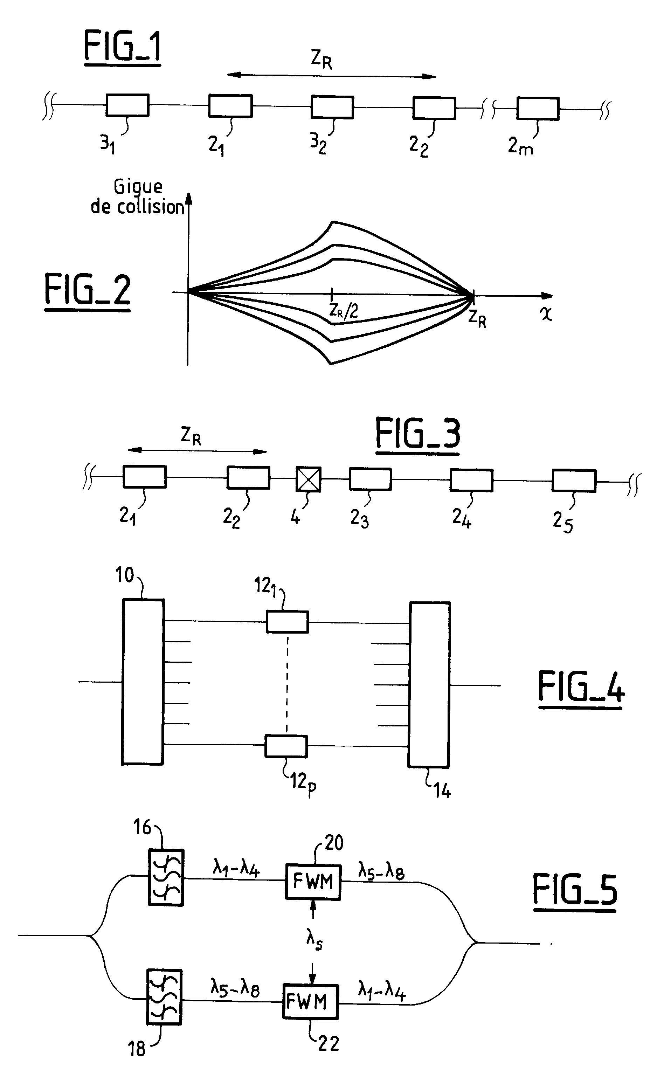

La figure 1 montre un premier exemple de réalisation de l'invention; comme expliqué plus haut, on utilise un schéma d'allocation des longueurs d'ondes assurant une synchronicité ou une quasi-synchronicité des temps bit des différents canaux à des intervalles réguliers, notés Z_{R}. On prévoit le long du système de transmission une pluralité de répéteurs 2₁ à 2ₘ, par exemple espacés de Z_{R}, comme décrit plus haut; dans le mode de réalisation de la figure 1, on échange les canaux entre chacun des couples de répéteurs adjacents, à égale distance de chacun des répéteurs: le système de transmission comprend aussi une pluralité de dispositifs 3₁ à 3ₘ d'échanges des canaux; ceux-ci échangent par exemple tous les canaux du multiplex, en transmettant sur une longueur λₙ₋ᵢ₊₁ les signaux reçus sur le canal de longueur d'onde λᵢ, et ce pour toutes les valeurs possibles de i entre 1 et n; si n est pair, ceci revient à échanger les longueurs d'onde des canaux de sorte à ce que chacun des canaux transmis sur une longueur d'onde dans la moitié inférieure [λ_{1,} λ_{n/2}] soit transmis sur une longueur d'onde de la moitié supérieure [λ_{n/2+1,} λₙ], et réciproquement. Si n est impair, on échange dans ce cas les longueurs d'onde de la moitié inférieure [λ_{1,} λ_{(n-1)/2}] et celles de la moitié supérieure [λ_{(n+3)/2,} λₙ] ; le canal de longueur d'onde λ_{(n+1)/2} peut être laissé sans modification.

La figure 2 montre l'allure de la gigue de collision Δt entre deux répéteurs, sur un intervalle Z_{R} du système de transmission; les ordonnées donnent la gigue de collision pour les signaux des différents canaux du multiplex, tandis que les abscisses donnent la distance le long du système de transmission; la figure montre qu'en partant d'un répéteur avec une gigue de collision nulle, la gigue de collision croît progressivement et exponentiellement en fonction de la distance, pour les différents canaux, et ce jusqu'à des valeurs d'abscisses Z_{R}/2, i. e. jusqu'à la position du dispositif d'échange des longueurs d'ondes. Après cette abscisse, i.e. après que les signaux ont traversé le dispositif d'échange des longueurs d'onde, le signe de la variation de fréquence résiduelle induite par les collisions asymétriques sur les signaux change. de telle sorte que la gigue totale sur les signaux diminue; ceci apparaît sur la figure 2, où l'on voit que la gigue de tous les signaux diminue et est sensiblement nulle à l'abscisse Z_{R}. Sur la figure 2, les signaux pour lesquels la gigue de collision est positive sont les signaux des canaux dont la longueur d'onde est initialement dans la moitié supérieure [λ_{n/2+1,} λₙ] de l'ensemble des longueurs d'onde; la variation de longueur d'onde résiduelle sur les signaux de ces canaux est positive sur la première moitié du trajet, avant les moyens d'échange des longueurs d'onde. Après échange des longueurs d'onde, les signaux sont transportés sur les longueurs d'onde de la moitié inférieure de l'ensemble des longueurs d'onde [λ_{1,} λ_{n/2-1}]; dans cette partie de la liaison, la gigue de collision est négative et fait décroître la valeur cumulée représentée à la figure 2. A l'inverse, les signaux pour lesquels la gigue de collision est positive sont les signaux des canaux dont la longueur d'onde est initialement dans la moitié inférieure [λ_{1,} λ_{n/2-1}] de l'ensemble des longueurs d'onde; la variation de longueur d'onde résiduelle sur les signaux de ces canaux est négative sur la première moitié du trajet, avant les moyens d'échange des longueurs d'onde, et positive sur la deuxième moitié du trajet.

La figure 3 montre un autre mode de réalisation de l'invention; le système de transmission est similaire à celui de la figure 1, à cela près qu'il ne comporte qu'un seul dispositif 4 d'échange des longueurs d'ondes, par exemple situé au milieu de la liaison; cette solution est particulièrement économique, et peut être préférentiellement mise en oeuvre lorsque la gigue de collision cumulée sur la moitié de la liaison est suffisamment faible pour ne pas être pénalisante.

Il est clair que toutes la variations possibles sur le nombre de dispositifs d'échange des longueurs d'onde sont imaginables; on peut faire varier le nombre de dispositifs entre 1 et n, ou même au delà en prévoyant plusieurs dispositifs d'échange entre deux répéteurs; de fait, le nombre de répéteurs et le nombre de dispositifs d'échange de longueurs d'onde ne sont pas liés.

Par ailleurs, il n'est pas indispensable de procéder à l'échange des signaux de tous les canaux pour mettre en oeuvre l'invention; comme le montre la figure 2, l'effet des collisions est plus important sur les canaux situés à l'extrémité du spectre. Il peut être suffisant d'échanger les canaux de l'extrémité du spectre, sans pour autant échanger l'ensemble des canaux; à titre d'exemple, dans un multiplex à 8 canaux, on peut échanger les longueurs d'onde des canaux d'ordre 1 et 2 et 7 et 8, sans pour autant agir sur les canaux d'ordre 3 à 6. Ceci limite les interventions sur les canaux et diminue le coût et la complexité des dispositifs d'échange. On peut aussi procéder à l'échange des longueurs d'onde de deux canaux seulement, en fonction des effets attendus des collisions.

La figure 4 montre un dispositif d'échange de longueurs d'onde selon l'invention. Ce dispositif comprend un démultiplexeur 10 recevant le multiplex et fournissant en sortie les différents canaux; les signaux fournis par le démultiplexeur sont transmis à des convertisseurs de longueur d'onde 12₁ à 12ₚ; chacun de ces convertisseur procède à une conversion de la longueur d'onde des signaux qu'il reçoit; on peut utiliser pour les convertisseurs des SOA (acronyme de l'anglais Semiconductor Optical Amplifiers, amplificateurs optiques à semiconducteur), ou encore des mélangeurs quatre ondes. Si l'ensemble des longueurs d'onde comprend deux moitiés inférieure et supérieure, avec en outre la longueur d'onde centrale dans le cas d'un nombre de canaux impair, les convertisseurs changent avantageusement les longueurs d'onde de sorte que des signaux reçu sur une longueur d'onde d'une des moitiés soit fourni en sortie du convertisseur sur l'autre moitié. Les signaux fournis en sortie des convertisseurs sont ensuite remultiplexés, dans un multiplexeur 14.

Comme expliqué ci-dessus, on peut ne procéder à l'échange des longueurs d'onde que sur certains des canaux. Dans un tel cas, il n'est clairement pas nécessaire que les moyens de démultiplexage démultiplexent les canaux sur lesquels il ne doit pas y avoir d'échange de longueurs d'ondes, par exemple les canaux 3 à 6 dans le cas donné plus haut. Les moyens de remultiplexage des canaux reçoivent alors non seulement les signaux fournis par les convertisseurs, mais aussi les canaux n'ayant pas subi de changement de longueur d'onde.

Comme expliqué plus haut, dans un mode de réalisation de l'invention, les convertisseurs effectuent l'échange des longueurs d'onde de telle sorte que les signaux reçus sur une longueur d'onde λᵢ soient transmis sur une longueur d'onde λₙ₋ᵢ₊₁, et vice-versa; dans ce cas, i est un entier prenant au moins une valeur entre 1 et n, et de préférence toutes les valeurs possibles.

Si le nombre n de canaux est pair, on prévoit par exemple n convertisseurs pour échanger les longueurs d'onde de l'ensemble des canaux. Si le nombre n de canaux est impair, la longueur d'onde du canal central du multiplex n'est pas affectée, et on peut prévoir n-1 convertisseurs pour échanger les longueurs d'onde des autres canaux. En général, on a donc 2E(n/2) convertisseurs, pour échanger le maximum de canaux.

Si certains canaux ne font pas l'objet d'un échange de longueur d'onde, on peut les munir de moyens de retard pour préserver la synchronicité des temps bits, dans le cas d'un schéma d'allocation des fréquences tel que celui évoqué plus haut.

La figure 5 montre un autre exemple de dispositif d'échange de longueurs d'onde selon l'invention. Le dispositif de la figure 5 fonctionne par mélange quatre onde d'une moitié des canaux du multiplex, de sorte à changer en une seule étape les longueurs d'onde d'une moitié des canaux. On décrit en référence à la figure 5 l'exemple d'un multiplex à 8 canaux, et on appelle première moitié les longueurs d'onde λ₁ à λ₄, et seconde moitié les longueurs d'ondes λ₅ à λ₈.

Le dispositif de la figure 5 comprend en entrée des moyens de séparation du multiplex en des premier et seconds signaux, le premier signal comprenant les canaux dont la longueur d'onde appartient à la première moitié, et le second signal comprenant les canaux dont la longueur d'onde appartient à la seconde moitié; ces moyens comprennent par exemple deux filtres 16 et 18 recevant le multiplex, et filtrant respectivement des signaux de la première ou de la deuxième moitié.

Les premier et second signaux sont ensuite fournis à des mélangeurs quatre ondes 20 et 22; ces mélangeurs reçoivent par ailleurs un signal à une longueur d'onde λₛ centrale, qui sert pour le mélange quatre ondes. Dans l'exemple, cette longueur d'onde vaut (λ₁+λ₈)/2.

Le mélangeur quatre ondes 20 recevant les canaux de longueurs d'onde λ₁ à λ₄ et le signal à λₛ fournit en sortie des signaux de longueur d'onde 2λₛ-λ₄, 2λₛ-λ₃, 2λₛ-λ₂, 2λₛ-λ₁, i.e. symétriques des longueurs d'onde d'origine par rapport à la longueur d'onde λₛ; le cas échéant, les autres signaux fournis par le mélangeur quatre ondes sont filtrés. Compte tenu du choix de λₛ, il apparaît que les signaux initialement reçus sur les longueurs d'ondes λ₁ à λ₄ sont transmis sur les longueurs d'onde λ₈ à λ₅.

De la même façon, le mélangeur quatre ondes 22 recevant les signaux sur les longueurs d'ondes λ₅ à λ₈ fournit en sortie des signaux de longueur d'onde λ₄ à λ₁.

Les signaux fournis par les mélangeurs quatre ondes sont ensuite combinés pour reformer un multiplex à huit canaux.

Le montage de la figure 5 permet un traitement global de la moitié des canaux, dans chacun des mélangeurs; par rapport au mode de réalisation de la figure 5, on évite de devoir prévoir un convertisseur par canal. De nouveau, il est clair que le montage de la figure 5 peut être adapté, et n'est pas limité à huit canaux; il est possible d'utiliser ce montage pour un nombre de canaux quelconque. Dans le cas d'un nombre de canaux impair, le canal central peut être transmis directement, sans passer par l'un des mélangeurs quatre ondes. Comme dans le montage précédent, on peut ne procéder à un échange des longueurs d'onde que pour certains des canaux, et par exemple pour les canaux situés aux extrémités du spectre.

Bien évidemment, l'invention n'est pas limitée aux modes de réalisation décrits à titre d'exemple. Le schéma d'allocation de longueurs d'onde n'est aucunement limité aux exemples décrits. Il faut aussi noter que l'on peut, par rapport aux modes de réalisation décrits, ajouter ou enlever des filtres ou des amplificateurs, en fonction des besoins. Enfin. l'invention a été décrite dans le cas d'une transmission monodirectionnelle. Elle s'applique à l'évidence à une transmission bidirectionnelle.

## Revendications

1. Système de transmission à fibre optique à multiplexage de longueurs d'onde et à signaux solitons, comprenant au moins une fois des moyens d'échange des longueurs d'ondes d'au moins deux canaux, de sorte à changer le signe de la variation de fréquence résiduelle induite par les collisions asymétriques sur les signaux des dits canaux.

2. Système de transmission selon la revendication 1, caractérisé en ce que les longueurs d'onde (λ₁ à λₙ) des différents canaux du multiplex constituent un ensemble comprenant une moitié inférieure et une moitié supérieure, et en ce que les moyens d'échange échangent les longueurs d'ondes d'au moins deux canaux, de sorte que les signaux transmis sur une longueur d'onde d'une des dites moitiés soient transmis sur une longueur d'onde de l'autre des dites moitiés.

3. Système de transmission selon la revendication 2, caractérisé en ce que les moyens d'échange effectuent l'échange des longueurs d'onde de telle sorte que les signaux transmis sur une longueur d'onde λᵢ d'une des dites moitiés soient transmis sur une longueur d'onde λₙ₋ᵢ₊₁ de l'autre des dites moitiés, i étant un entier prenant au moins une valeur entre 1 et n.

4. Système de transmission selon la revendication 3, caractérisé en ce que les moyens d'échange effectuent en outre l'échange des longueurs d'onde de telle sorte que les signaux transmis sur une longueurs d'onde λₙ₋ᵢ₊₁ d'une des dites moitiés soient transmis sur une longueur d'onde λᵢ de l'autre des dites moitiés.

5. Système de transmission selon la revendication 3, caractérisé en ce que l'entier i prend toutes les valeurs possibles entre 1 et n.

6. Système de transmission selon l'une des revendications 1 à 5. caractérisé en ce qu'il comprend des moyens d'échange uniques disposés sensiblement au milieu du système de transmission.

7. Système de transmission selon l'une des revendications 1 à 5, caractérisé en ce qu'il comprend une pluralité de moyens d'échange espacés le long du système de transmission.

8. Procédé de transmission de signaux solitons en multiplexage de longueurs d'onde, comprenant au moins une étape d'échange des longueurs d'ondes d'au moins deux canaux, de sorte à changer le signe de la variation de fréquence résiduelle induite par les collisions asymétriques sur les signaux des dits canaux.

9. Procédé selon la revendication 8, caractérisé en ce que les longueurs d'onde (λ₁ à λₙ) des différents canaux du multiplex constituent un ensemble comprenant une moitié inférieure et une moitié supérieure, et en ce que l'étape d'échange des canaux s'effectue de sorte que les signaux transmis sur une longueur d'onde d'une des dites moitiés soient transmis sur une longueur d'onde de l'autre des dites moitiés.

10. Procédé selon la revendication 9, caractérisé en ce que l'étape d'échange comprend l'échange des longueurs d'onde de telle sorte que les signaux transmis sur une longueur d'onde λᵢ d'une des dites moitiés soient transmis sur une longueur d'onde λₙ₋ᵢ₊₁ de l'autre des dites moitiés, i étant un entier prenant au moins une valeur entre 1 et n.

11. Procédé selon la revendication 10, caractérisé en ce que l'étape d'échange comprend en outre l'échange des longueurs d'onde de telle sorte que les signaux transmis sur une longueurs d'onde λₙ₋ᵢ₊₁ d'une des dites moitiés soient transmis sur une longueur d'onde λᵢ de l'autre des dites moitiés.

12. Procédé selon la revendication 10, caractérisé en ce que l'entier i prend toutes les valeurs possibles entre 1 et n.

13. Procédé selon l'une des revendications 8 à 12, caractérisé en ce qu'il comprend une seule étape d'échange, s'effectuant sensiblement après la moitié du temps de propagation.

14. Procédé selon l'une des revendications 8 à 12, caractérisé en ce qu'il comprend une pluralité d'étapes d'échange.

15. Application du procédé selon l'une quelconques des revendications 8 à 14 à la réduction de la gigue de collision.

16. Dispositif d'échange de longueurs d'ondes, comprenant
- des moyens de démultiplexage d'un multiplex en longueurs d'onde de signaux solitons, fournissant en sortie une pluralité de canaux à des longueurs d'onde (λ₁ à λₙ), les dites longueurs d'onde constituant un ensemble formé d'une moitié inférieure et d'une moitié supérieure;
- au moins deux convertisseurs de longueur d'onde, pour échanger les longueurs d'onde d'un canal choisi dans l'une des dites moitiés et d'un canal choisi dans l'autre des dites moitiés;
- des moyens de remultiplexage des canaux.

17. Dispositif selon la revendication 16, caractérisé en ce que les convertisseurs effectuent l'échange des longueurs d'onde de telle sorte que les signaux reçus sur une longueur d'onde λᵢ d'une des dites moitiés soient transmis sur une longueur d'onde λₙ₋ᵢ₊₁ de l'autre des dites moitiés, et vice-versa, i étant un entier prenant au moins une valeur entre 1 et n.

18. Dispositif selon la revendication 16 ou 17, caractérisé en ce qu'il comprend 2E(n/2) convertisseurs, n étant le nombre de canaux.

19. Procédé d'échange de longueurs d'ondes dans un multiplex en longueurs d'onde de signaux solitons, les longueurs d'onde (λ₁ à λₙ) constituant un ensemble formé d'une moitié inférieure et d'une moitié supérieure, le procédé comprenant
- une étape de démultiplexage des canaux du multiplex;
- une étape d'échange des longueurs d'onde d'au moins un canal choisi dans l'une des dites moitiés et d'au moins un canal choisi dans l'autre des dites moitiés;
- une étape de remultiplexage des canaux.

20. Procédé selon la revendication 19, caractérisé en ce que l'étape d'échange comprend l'échange d'une longueur d'onde λᵢ d'une des dites moitiés et d'une longueur d'onde λₙ₋ᵢ₊₁ de l'autre des dites moitiés, i étant un entier prenant au moins une valeur entre 1 et n.

21. Procédé selon la revendication 19 ou 20, caractérisé en ce que l'entier i prend toutes les valeurs entre 1 et E(n/2), n étant le nombre de canaux.

22. Dispositif d'échange de longueurs d'onde, à l'intérieur d'un multiplex en longueurs d'onde de signaux solitons. les longueurs d'onde (λ₁ à λₙ) du multiplex constituant un ensemble formé d'une moitié inférieure et d'une moitié supérieure, le dispositif comprenant:
- des moyens de séparation du multiplex en des premier et seconds signaux, le premier signal comprenant les canaux dont la longueur d'onde appartient à une moitié, et le second signal comprenant les canaux dont la longueur d'onde appartient à l'autre moitié;
- des premiers moyens de conversion pour convertir les longueurs d'ondes des canaux du premier signal en des longueurs d'onde de la dite autre moitié;
- des seconds moyens de conversion pour convertir les longueurs d'ondes des canaux du second signal en des longueurs d'onde de la dite moitié;
- des moyens de combinaison des signaux fournis par les dits premiers et seconds moyens de conversion.

23. Dispositif selon la revendication 22, caractérisé en ce que les dits premiers et seconds moyens de conversion comprennent des mélangeurs quatre ondes pour conjuguer les signaux par rapport à une fréquence (λ₁ + λₙ)/2 médiane des fréquences extrêmes du multiplex.

24. Dispositif selon la revendication 23, caractérisé en ce que les dits premiers moyens de conversion, ou respectivement les seconds moyens de conversion, comprennent en outre des filtres pour filtrer les longueurs d'ondes autres que celles de la dite autre moitié, ou respectivement autres que celles de la dite moitié.

25. Procédé d'échange de longueurs d'onde, à l'intérieur d'un multiplex en longueurs d'onde de signaux solitons, les longueurs d'onde (λ₁ à λₙ) du multiplex constituant un ensemble formé d'une moitié inférieure et d'une moitié supérieure, le procédé comprenant:
- une étape de séparation du multiplex en des premier et seconds signaux, le premier signal comprenant les canaux dont la longueur d'onde appartient à une moitié, et le second signal comprenant les canaux dont la longueur d'onde appartient à l'autre moitié;
- une étape de conversion des longueurs d'ondes des canaux du premier signal en des longueurs d'onde de la dite autre moitié;
- une étape de conversion des longueurs d'ondes des canaux du second signal en des longueurs d'onde de la dite moitié:
- une étape de combinaison des premier et second signaux convertis.

26. Procédé selon la revendication 25, caractérisé en ce que l'étape de conversion comprend une conversion par mélange quatre ondes pour conjuguer les signaux par rapport à une fréquence (λ₁ + λₙ)/2 médiane des fréquences extrêmes du multiplex.

27. Dispositif selon la revendication 26, caractérisé en ce que l'étape de conversion comprend en outre une étape de filtrage après l'étape de mélange quatre ondes.
